(19) Europäisches Patentamt
European Patent Office
Office européen des brevets

(11) **EP 2 155 402 B1**

(12) **EUROPEAN PATENT SPECIFICATION**

(45) Date of publication and mention
of the grant of the patent:
**04.05.2016 Bulletin 2016/18**

(21) Application number: **08718727.4**

(22) Date of filing: **13.03.2008**

(51) Int Cl.:
**B05B 7/00** *(2006.01)*      **A01M 7/00** *(2006.01)*

(86) International application number:
**PCT/GB2008/000885**

(87) International publication number:
**WO 2008/149054 (11.12.2008 Gazette 2008/50)**

(54) **SPRAY APPARATUS**

SPRÜHVORRICHTUNG

APPAREIL PULVÉRISATEUR

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **08.06.2007   GB 0711000**
**07.02.2008   GB 0802273**

(43) Date of publication of application:
**24.02.2010   Bulletin 2010/08**

(73) Proprietor: **Knight, Brian George**
**Oakham,**
**Rutland LE15 8NF (GB)**

(72) Inventor: **Knight, Brian George**
**Oakham,**
**Rutland LE15 8NF (GB)**

(74) Representative: **Andrews, Timothy Stephen et al**
**Marks & Clerk LLP**
**62-68 Hills Road**
**Cambridge**
**Cambridgeshire CB2 1LA (GB)**

(56) References cited:
GB-A- 2 227 399      GB-A- 2 327 587
GB-A- 2 423 227      US-A- 3 599 866
US-A- 5 730 806

## Description

The invention relates to spray apparatus primarily for use in agriculture, although such apparatus may find application in horticulture or in industry generally.

## BACKGROUND TO THE INVENTION

Conventionally, an agricultural sprayer comprises a spray boom formed from folding sections, each of which is typically 6m in length, and with spray nozzles arranged along the boom's length. The nozzles are arranged into groups that can be switched on and off by the operator or by a global positioning system (GPS) to accommodate changes in working width influenced by field shapes. GPS control has made it easy to fit more groups of nozzles for a given width of spray boom. This greatly improves the efficiency of the sprayer by reducing the amount of ground over-sprayed, that is sprayed twice.

Most chemical application in agriculture is carried out through conventional hydraulic spray nozzles of a wide variety of designs. Two examples of such spray nozzles are twin fluid and air induction spray nozzles. Both types of nozzles are designed to atomise the solution to be applied, not only by the characteristic of the nozzle outlet but also by the introduction of air into the nozzle. Low pressure compressed air is used in a twin fluid nozzle and an air induction spray nozzle inducts air through a venturi within the nozzle assembly.

One advantage of the twin fluid design over the air induction design is that the droplet spectrum of the atomised solution may be controlled by the amount of air supplied to the nozzle. Thus a single nozzle may be used to cover a wide range of application rates and droplet ranges which normally require a plurality of conventional spray nozzles. However, there are disadvantages in using such nozzles.

The amount of compressed air that must be produced is quite high and distributing this on the spraying apparatus requires considerable pipe work extending along the length of the sprayer boom. Furthermore, the compressed air typically used by the nozzle is low pressure, i.e. in a pressure range from 0 to 2 bar. Accordingly, it is usually provided by a low pressure air compressor. Low pressure air requires large diameter pipes to reduce losses in the distribution system. Thus extensive, large pipe-work is required for the air nozzles to function.

GB 2227399 describes a method of spraying agricultural material from a spray boom in which high pressure low volume air emerges along the span of the boom and entrains ambient air to produce a multiplied volume of air flowing along the length of the boom. Material to be sprayed from said boom is directed in the direction of said flow of the multiplied volume of air to be entrained therein for spraying as a spray of liquid droplets.

US 5730806 describes a gas-liquid cleaning spray system which employs one or more converging-diverging nozzles to accelerate a gas-liquid mixture to a supersonic velocity for cleaning various types of articles.

## SUMMARY OF INVENTION

According to the present invention there is provided spray apparatus as set out in claim 1.

The use of high pressure fluid reduces the losses in pipe work of the high pressure fluid system and therefore improves the efficiency of the nozzle. As set out above, low pressure is typically but not limited to the range 0 to 2 bar. High pressure is above this range and is typically but not limited to up to 8 bar.

Boyles law states that the pressure P of a gas multiplied by the volume V equals a constant (PV=k) assuming there is no temperature change. Accordingly, reducing the pressure of the fluid results in an expansion of the fluid adjacent the nozzle and this creates a large increase in volume. By changing the pressure of the fluid in the vicinity of the nozzle, high pressure fluid may be transported through the rest of the system. Accordingly, less volume of fluid has to be produced and transported by the high pressure system.

Tests also show the chemical flow range of the nozzle is significantly improved. This is particularly important because previously it has been necessary to change components within the nozzle to achieve similar results. It is very time consuming to change the large number of nozzles fitted to wide sprayers.

The high pressure fluid system may be a high pressure compressed air system with a compressor. The pressure reducing means may be in the form of a restrictor, a restricting orifice or an air venturi. The air venturi may introduce additional air and therefore further reduce the volume of compressed air required. An additional advantage of the venturi is that if the atomising air is turned off, air may still be introduced through the venturi's open port if the passage of fluid through the spray nozzle is designed to induct air. This may be used if very coarse droplets are required.

The high pressure fluid system is connected to at least one nozzle via a switch which activates or deactivates the at least one nozzle in response to flow changes from the high pressure fluid system. The switch activates the nozzle in response to fluid pressure applied from the high pressure fluid system and deactivate the nozzle when no fluid pressure is applied. The switch may comprise a component which opens when air pressure is applied and closes, e.g. via spring pressure, when air pressure is not applied. Accordingly, if the fluid is turned off, spraying stops and recommences when pressure is applied. Such high pressure switching is known.

The switching may be automatically controlled, e.g. by GPS, to eliminate operator mistakes. This may ensure accurate application to the target area and full traceability of product applied without relying on human input. Furthermore, switching at the nozzle improves response times. Accordingly, fluid operated nozzle switching is becoming more desirable and commonly used.

The known high pressure switching system may be used in conjunction with the known atomising nozzles. However, in such a combination, it is necessary to have two separate compressed air systems, one providing high pressure compressed air to the switching system and a second providing low pressure compressed air to the atomising nozzle. Providing two systems requires a large amount of pipe-work. However, in the present system, the high pressure fluid system is providing the dual functionality of atomising the spray liquid and controlling the nozzle switching. A single feed pipe feeds the at least one nozzle to feed both the switching and the twin fluid nozzle, thus eliminating a large amount of pipe work and simplifying the apparatus. Furthermore, such a combined system will be cheaper to fit than a system which uses a standard high pressure nozzle switching system and a standard low pressure atomisation system.

The apparatus may comprise a plurality of nozzles with some or all of the nozzles connected to the high pressure fluid system to provide atomisation of the spray chemical and/or nozzle switching as described above. A plurality of the nozzles may be associated with a single pressure reducing means. Thus the nozzles may be arranged in groups with each group fed from it's own pressure reducing means, e.g. via a manifold. In this way, the pressure reducing means and the associated group of nozzles can be kept close together. Typically, the nozzles may be at around 500mm spacing along the spray boom and it is envisaged that a single pressure reducing means might feed a group of eight or nine spray nozzles. Thus the low pressure air pipe-work from the pressure reducing means to the furthest nozzles on each side of a centrally disposed high-pressure airline might typically be around 2m in length.

BRIEF DESCRIPTION OF THE DRAWINGS

The invention is diagrammatically illustrated, by way of example, in the accompanying drawings, in which

     Figure 1a is a schematic drawing of a spray apparatus according to the invention;
     Figures 1b and 1c are side and perspective views of a nozzle assembly of the spray apparatus of Figure 1a;
     Figure 2a is a schematic flow diagram of the nozzle assembly of Figure 1b incorporating a restrictor;
     Figure 2b is a schematic flow diagram of the nozzle assembly of Figure 1b incorporating an air venture.

DETAILED DESCRIPTION OF THE DRAWINGS

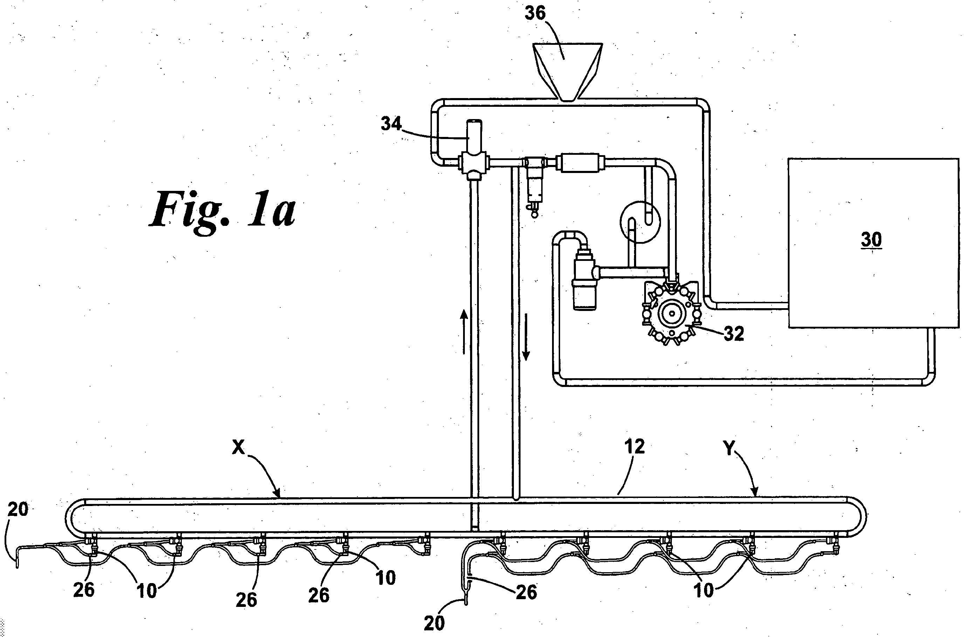

Figure 1a shows an agricultural crop sprayer, of the kind that can be vehicle mounted or towed by a tractor. Such sprayers generally comprise a source of spray liquid usually in the form of a tank 30. The tank 30 is connected by pipe-work 12 to a pump 32 and to spray nozzle assemblies 10, so that the spray liquid can be pumped under pressure through the pipe-work 12 to the nozzle assemblies to be applied to a crop. The spray nozzles are mounted at intervals along a spray boom (not shown) and as seen in Figure 1a the left-hand loop X of pipe-work shows one possible implementation of the present invention while the right-hand loop Y of the pipe-work shows another implementation. A control valve 34 is operated to direct the spray liquid back to the tank 30. A filling hopper 36 is also provided by which chemical to be sprayed can be introduced into the apparatus.

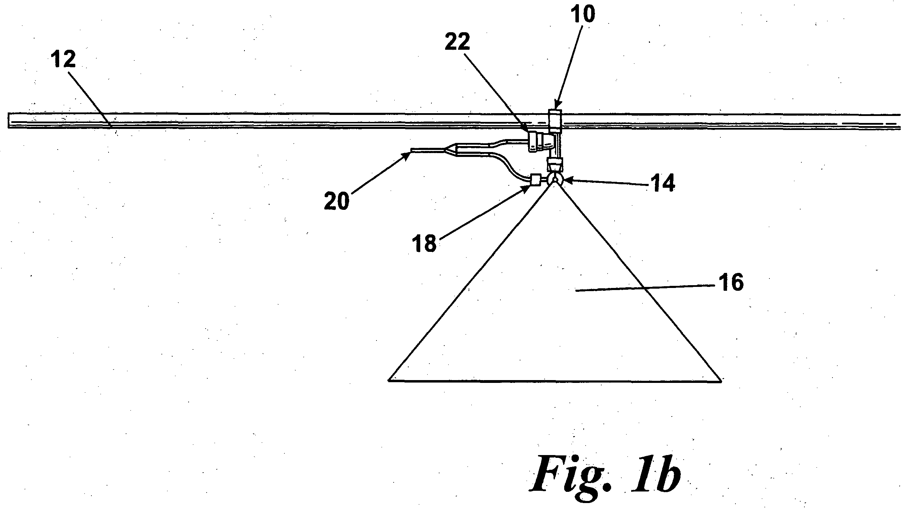

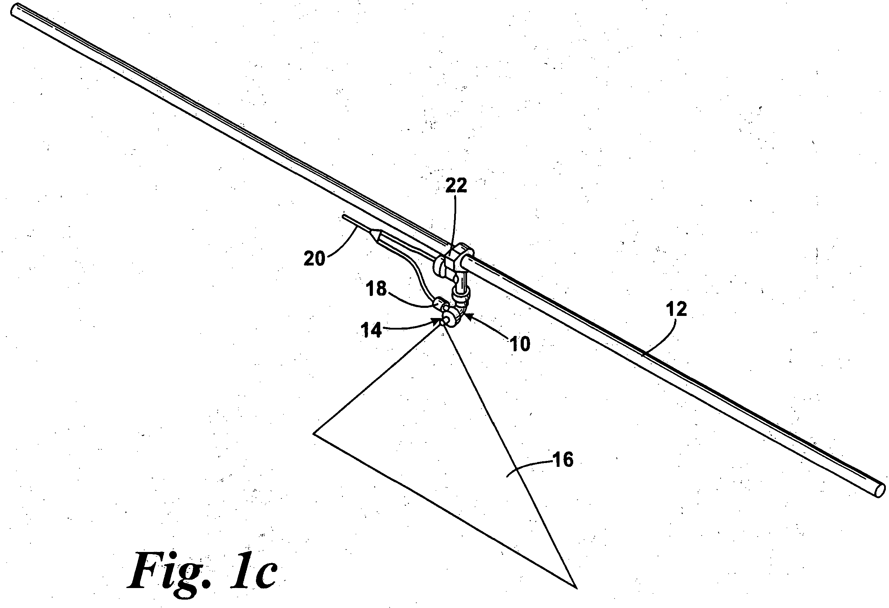

Figures 1b and 1c show a nozzle assembly 10 for the spray apparatus of Figure 1a. The nozzle assembly 10 comprises an on/off valve 22 which is connected to a source of high pressure air by pipe-work 20. The valve is activated automatically by switching on the flow of high pressure compressed air and deactivated by turning off the flow of air.

The nozzle assembly 10 also comprises an atomising spray nozzle 14 which atomises the spray liquid to apply an atomised spray sheet 16 to a crop. Atomisation is achieved by the structure of the nozzle itself and also by the introduction of air into the nozzle.

Air is introduced into the spray nozzle from the high pressure compressed air system for switching the nozzle. However, for atomisation of the spray liquid, low pressure air is required. The spray nozzle is thus connected to high pressure air system via airline pipe-work 20 and means 18 to reduce the pressure of the compressed air to typically 0 to 2 bar (but not limited to). The pressure reduction means is located close to the spray nozzle to minimise the length of pipe through which the low pressure compressed air passes.

Thus, the high pressure compressed air system is providing the dual functionality of atomising the spray liquid and controlling the nozzle switching. As shown in Figure 1a, each nozzle is fed with a single pipe from the high pressure system to feed both the switching and the atomising functions.

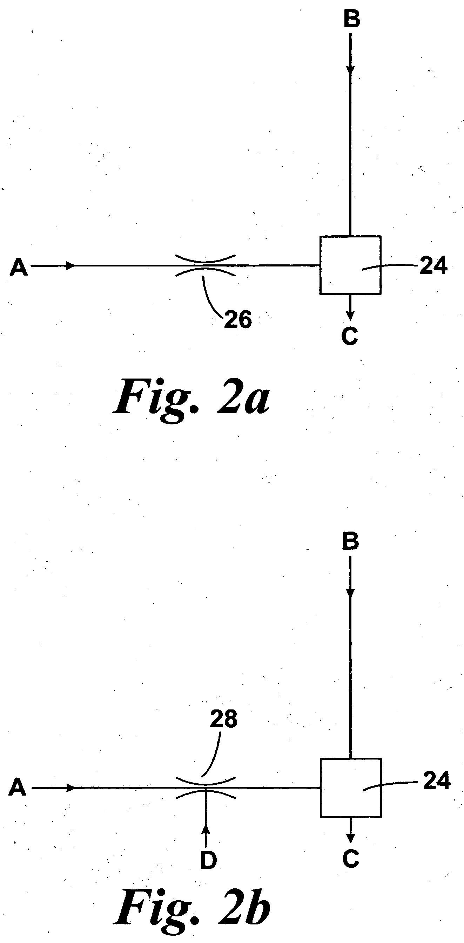

Figure 2a shows a restrictor 26 which reduces the pressure of the high pressure compressed air A feeding into the spray nozzle 24. The restrictor 26 is in the form of section of airline pipe-work with a reduced diameter, i.e. a narrowing of the pipe. The high pressure compressed air is reduced to low pressure compressed air according to Boyle's law. The increase in volume of the compressed air following the restrictor results in a reduction of the compressed air pressure. The low pressure compressed air is fed to the spray nozzle 24 together with spray liquid B to produce an atomised spray output C.

In the implementation shown in the left-hand pipe-work loop X in Figure 1a, a small restrictor 26 is placed next to each spray nozzle assembly, whereas in the implementation shown in right-hand pipe-work loop Y in Figure 1a, a single somewhat larger restrictor 26 is placed in the high pressure airline 20 immediately upstream of an adjacent group of nozzles to feed all of the nozzles in the group. Obviously the group of nozzles is limited by the distance between them and thus the length of the low-pressure airline, since, in accordance with the aims of the present invention, it needs to be confined to a relatively small length of low pressure airline. Preferably the group of spray nozzles covers a length of the spray boom of no more than around four metres, although a group of nozzles extending over six metres might be possible. Thus where the nozzles are spaced apart by a distance of 500mm, the group of spray nozzles may comprise nine adjacent nozzles.

Figure 2b shows an alternative means for reducing the pressure, namely an air Venturi 28. The Venturi 28 is similar to the restrictor in that it comprises a section of pipe-work of reduced diameter. The narrower section of pipe-work also comprises a small hole. The high pressure compressed air is reduced to low pressure compressed air according to Bernoulli's principle. The fluid velocity must increase through the constriction to satisfy the equation of continuity whilst its pressure must decrease due to conservation of energy. The gain in kinetic energy is supplied by a drop in pressure. The theoretical pressure drop at the constriction is given by:

$$(\rho/2)\,(v_2{}^2 - v_1{}^2)$$

Where

V₁ is the fluid velocity before the constriction;
V₂ is the fluid velocity after the constriction, and
ρ is the fluid density

As the high pressure compressed air passes into the narrowed section, the compressed air speed increases. As it passes into the following wider section, the compressed air speed decreases and air D is drawn into the pipe-work through the small hole. Accordingly, a mixture of low pressure compressed air and inducted air is presented to the spray nozzle which combines with the input spray liquid B to produce an atomised spray output C.

## Claims

1. Spray apparatus comprising
   at least one nozzle (14, 24),
   a source of spray chemical (30) connected to the at least one nozzle,
   a high pressure fluid system (20) and
   a pressure reducing means (18) adjacent the at least one nozzle (14, 24)
   wherein the high pressure fluid system is connected to the at least one nozzle via the pressure reducing means (18) whereby low pressure fluid is fed through the at least one nozzle (14,24) together with spray chemical to produce an atomised spray output (16) **characterised in that** the high pressure fluid system is connected to the at least one nozzle via a switch (22) which activates or deactivates the at least one nozzle in response to flow changes from the high pressure fluid system.

2. Spray apparatus according to claim 1, wherein the pressure reducing means is in the form of a restrictor (26), a restricting orifice or an air venturi (28).

3. Spray apparatus according to claim 1 or claim 2, wherein the flow from the high pressure fluid system to control the switch (22) is automatically controlled.

4. Spray apparatus according to any preceding claim, comprising a plurality of nozzles (14, 24) each of which is connected to the high pressure fluid system.

5. Spray apparatus according to claim 4, wherein a plurality of nozzles (14, 24) is associated with a single pressure reducing means (18).

## Patentansprüche

1. Sprühvorrichtung, umfassend
   mindestens eine Düse (14, 24),
   eine Quelle für eine Sprüh-Chemikalie (30), welche mit der mindestens einen Düse verbunden wird,
   ein Hochdruckfluidsystem (20) und
   ein Druckverringerungsmittel (18), das an die mindestens eine Düse (14, 24) angrenzt,
   wobei das Hochdruckfluidsystem mit der mindestens einen Düse über das Druckverringerungsmittel (18) verbunden wird, wobei Niederdruckfluid durch die mindestens eine Düse (14, 24) zusammen mit einer Sprüh-Chemikalie geleitet wird, um einen Sprühnebel-Ausstoß (16) zu erzeugen, **dadurch gekennzeichnet, dass** das Hochdruckfluidsystem mit der mindestens einen Düse über einen Schalter (22) verbunden wird, welcher die mindestens eine Düse als Reaktion auf Durchflussänderungen vom Hochdruckfluidsystem aktiviert oder deaktiviert.

2. Sprühvorrichtung nach Anspruch 1, wobei das Druckverringerungsmittel in Form einer Drossel (26), einer Drosselöffnung oder einem Venturi-Luftsystem (28) vorliegt.

3. Sprühvorrichtung nach Anspruch 1 oder Anspruch 2, wobei der Durchfluss vom Hochdruckfluidsystem zum Steuern des Schalters (22) automatisch gesteuert wird.

4. Sprühvorrichtung nach einem der vorhergehenden Ansprüche, mit einer Mehrzahl an Düsen (14, 24), von denen jede mit dem Hochdruckfluidsystem verbunden ist.

**5.** Sprühvorrichtung nach Anspruch 4, wobei eine Mehrzahl an Düsen (14, 24) mit einem einzigen Druckverringerungsmittel (18) verbunden ist.


**Revendications**

**1.** Appareil de pulvérisation comprenant
au moins une buse (14, 24),
une source de substance chimique pour pulvérisation (30) reliée au moins à une buse,
un système de fluide à haute pression (20) et
un moyen de réduction de pression (18) adjacent à l'au moins une buse (14, 24) dans lequel le système de fluide à haute pression est relié à l'au moins une buse par l'intermédiaire du moyen de réduction de pression (18) moyennant quoi du fluide à basse pression est alimenté à travers l'au moins une buse (14,24) avec une substance chimique pour pulvérisation pour produire une sortie de pulvérisation atomisée (16)
**caractérisée par le fait que** le système de fluide à haute pression est relié à l'au moins une buse par l'intermédiaire d'un commutateur (22) qui active ou désactive l'au moins une buse en réponse à des variations du débit du système de fluide à haute pression.

**2.** Appareil de pulvérisation selon la revendication 1, dans lequel le moyen réducteur de pression se présente sous la forme d'un étranglement (26), d'un orifice de restriction ou d'un venturi à air (28).

**3.** Appareil de pulvérisation selon la revendication 1 ou la revendication 2, dans lequel l'écoulement du système de fluide à haute pression pour commander l'interrupteur (22) est commandé automatiquement.

**4.** Appareil de pulvérisation selon l'une quelconque des revendications précédentes, comprenant une pluralité de buses (14, 24) dont chacune est connectée au système de fluide à haute pression.

**5.** Appareil de pulvérisation selon la revendication 4, dans lequel une pluralité de buses (14, 24) est associée à un seul moyen de réduction de pression (18).

Fig. 1a

*Fig. 1b*

*Fig. 1c*

**Fig. 2a**

**Fig. 2b**

**EP 2 155 402 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2227399 A
- US 5730806 A